# FASCICULE DE BREVET EUROPEEN

(11) **EP 1 879 040 B1**
(45) Date de publication et mention de la délivrance du brevet: **14.04.2010**
(21) Numéro de dépôt: 07111736.0
(22) Date de dépôt: 04.07.2007
(51) Int. Cl.: G01S 1/00, G01S 5/14

(54) **Dispositif de génération de messages de description de format de futurs messages relatifs à un système de navigation par satellites**
Vorrichtung zur Erzeugung von Nachrichten zur Beschreibung des Formates von zukünftigen Satelliten-Navigationsnachrichten
Apparatus for generating messages for describing the format of future satellite navigation messages

(30) Priorité: 11.07.2006 FR 0652901
(43) Date de publication de la demande: 16.01.2008
(73) Titulaire: Alcatel Lucent, 75008 Paris (FR)
(72) Inventeur: Damidaux, Jean-Louis, 31650 Auzielle (FR); Fernet, Charles, 31300 Toulouse (FR)
(74) Mandataire: Hedarchet, Stéphane

(56) Documents cités:
- EP-A2- 1 063 597
- WO-A-96/28901
- WO-A-03/040749
- US-A- 5 153 598
- US-A1- 2002 152 467
- US-A1- 2004 073 365

## Description

L'invention concerne les systèmes de navigation par satellites (de type RNSS (pour « Radio Navigation Satellite System ») ou GNSS (pour « Global Navigation Satellite System »)), et plus précisément la génération des messages qui sont relatifs à de tels systèmes et qui sont destinés à des récepteurs de navigation.

On entend ici par « système de navigation par satellites » tout système dédié à la navigation et comportant une constellation de satellites placés en orbite autour d'un astre (par exemple la Terre), un ensemble de stations de surveillance de satellites (terrestres ou spatiales), et un centre de calcul. Il pourra s'agir, par exemple, de l'un des systèmes existants (GPS, GLONASS) ou de l'un des futurs systèmes (GALILEO, COMPASS), ou encore de l'un de leurs équivalents ou dérivés.

Comme le sait l'homme de l'art, les systèmes de navigation par satellites diffusent périodiquement au moyen de leurs satellites (et/ou d'équipements associés, comme par exemple des pseudolites (tels que des émetteurs implantés au sol ou sur des avions à haute altitude)), à destination des récepteurs de navigation d'usagers, des messages (de navigation et d'intégrité) comportant des informations de navigation relatives aux positions orbitales et/ou synchronisations (décalage d'horloge interne par rapport à l'horloge de référence du système) de leurs satellites.

Il est rappelé que de tels messages sont généralement constitués de plusieurs paramètres ayant leurs propres type et représentation (entier, nombre flottant, nombre de bits, et analogue) prédéfinis et contenus dans des champs de données successifs associés les uns aux autres d'une façon prédéfinie.

US 2004/073365 décrit un système de localisation par satellites utilisant des signaux d'assistance transmis dans un format "mèta data".

Les récepteurs de navigation disposent donc d'une interface connaissant les types et représentations des paramètres qui sont contenus dans les messages diffusés ainsi que la façon dont les champs contenant ses paramètres sont associés les uns aux autres dans les messages diffusés. En d'autres termes, l'interface de chaque récepteur de navigation est configurée spécifiquement en fonction du format des messages reçus de manière à pouvoir comprendre leurs contenus.

Les systèmes de navigation font l'objet d'évolutions de plus en plus fréquentes, de manière à permettre la mise en oeuvre de services nouveaux et/ou la correction de problèmes. Or, certaines de ces évolutions peuvent nécessiter des modifications du format des messages. A titre d'exemple, une évolution peut entraîner l'ajout d'un ou plusieurs paramètres, ou bien la modification du type et/ou de la représentation d'un ou plusieurs paramètres.

De telles modifications de format étant souvent incompatibles avec les récepteurs de navigation existants, certaines évolutions des systèmes de navigation ne peuvent donc pas être mises en oeuvre.

Il a été proposé, pour le système GPS, d'ajouter au signal appelé « L1 C/A », un nouveau signal appelé « L1C » dédié. Les messages du nouveau signal L1C sont compréhensibles par les nouvelles générations de récepteur de navigation et sont beaucoup plus performants que ceux du signal L1 C/A. Ce nouveau signal L1C est transmis sur la même fréquence que le signal L1 C/A. L'inconvénient de cette solution réside dans le fait qu'elle impose la diffusion des deux signaux L1 C/A et L1C, ce qui est onéreux et consomme des ressources qui sont limitées.

Une autre solution a été proposée pour les systèmes de navigation dits « augmentés » ou SBAS (pour « Satellite Based Augmentation System »). Ces systèmes SBAS disposent actuellement de capacités limitées qui leur interdisent notamment de surveiller plus de 51 satellites. Il a donc été proposé d'ajouter au signal appelé « L1 », dédié aux messages compréhensibles par les récepteurs de navigation des anciennes générations, un nouveau signal appelé « L5 1 », dédié aux messages compréhensibles par les nouvelles générations de récepteur de navigation. Ce nouveau signal L5 I est transmis sur une fréquence différente de celle utilisée pour le signal L1. L'inconvénient de cette solution réside dans le fait que le service offert par le signal L1 est nettement inférieur à celui offert par le nouveau signal L5 I, ce qui défavorise les récepteurs des anciennes générations qui ne sont adaptés qu'au signal L1.

L'invention a donc pour but de remédier à tout ou partie des inconvénients précités.

Elle propose à cet effet un dispositif, dédié à la génération de messages relatifs à au moins un système de navigation par satellites et destinés à des récepteurs de navigation, et comprenant des moyens de traitement chargés de générer des messages dits « de description » destinés à être diffusés vers les récepteurs de navigation à partir d'une date choisie et comprenant la description du format des futurs messages, devant être diffusés vers les récepteurs à partir d'une date postérieure à la date choisie.

Ainsi, les récepteurs de navigation peuvent stocker la description d'un nouveau format de message avant que celui-ci ne soit modifié, si bien que dès que le système de navigation par satellites se met à diffuser les messages selon le nouveau format, ils peuvent se reconfigurer de manière à pouvoir immédiatement comprendre (et donc utiliser) leur contenu.

Le dispositif selon l'invention peut comporter d'autres caractéristiques qui peuvent être prises séparément ou en combinaison, et notamment :
- ses moyens de traitement peuvent être chargés de définir des descriptions de format comprenant au moins des descriptions de champs de données successifs, associés respectivement à des paramètres (par exemple décrits chacun par au moins un type et une représentation), et la façon dont ces champs de données seront associés les uns aux autres afin de constituer les futurs messages ;
   ➢ ses moyens de traitement peuvent être chargés d'adjoindre aux définitions de description de format des données qui sont représentatives de la fréquence de répétition des futurs messages ;
- ses moyens de traitement peuvent être chargés de générer les messages de description de façon périodique. Dans ce cas, la période temporelle est choisie grande par rapport à la période de transmission des messages ;
- ses moyens de traitement peuvent être chargés de générer les messages de description pendant une longue durée à compter de la date choisie.

L'invention propose également un équipement de transmission de messages relatifs à un système de navigation par satellites, comprenant, d'une part, un dispositif de génération de messages du type de celui présenté ci-avant, et d'autre part, des moyens de transmission chargés de transmettre, à destination des satellites du système de navigation par satellites et/ou d'équipements de diffusion associés audit système de navigation par satellites, des messages et des messages de description générés par le dispositif.

L'invention propose également un équipement, pour un système de navigation par satellites, comprenant un dispositif de génération de messages du type de celui présenté ci-avant.

L'invention propose également un récepteur de navigation, comprenant i) des moyens de réception (propres à recevoir des messages relatifs à un système de navigation par satellites), ii) des moyens d'interface (configurés de manière à utiliser les messages reçus par les moyens de réception), iii) des moyens de stockage, et iv) des moyens de traitement chargés, en cas de réception d'un message de description généré par un dispositif de génération de messages du type de celui présenté ci-avant, de stocker dans les moyens de stockage la description de format nouveau qu'il contient, et, en cas de réception d'une instruction de changement de configuration, de reconfigurer les moyens d'interface en fonction de la description de format nouveau stockée, afin que les moyens d'interface puissent utiliser les messages présentant le format nouveau.

L'invention est particulièrement bien adaptée, bien que de façon non exclusive, aux systèmes de navigation par satellites comme par exemple GALILEO, GPS, GLONASS et COMPASS, ainsi que leurs variantes et leurs équivalents, y compris ceux fonctionnant en mode dit « assisté ».

D'autres caractéristiques et avantages de l'invention apparaîtront à l'examen de la description détaillée ci-après, et des dessins annexés, sur lesquels :
- la figure 1 illustre de façon très schématique et fonctionnelle une partie d'un système de navigation par satellites comprenant un centre de calcul équipé d'un exemple de réalisation d'un dispositif de génération de messages selon l'invention,
- la figure 2 illustre de façon très schématique et fonctionnelle un terminal de communication (ici mobile) équipé d'un exemple de réalisation d'un récepteur de navigation selon l'invention.

Les dessins annexés pourront non seulement servir à compléter l'invention, mais aussi contribuer à sa définition, le cas échéant.

L'invention a pour objet de permettre la reconfiguration des récepteurs de navigation de sorte qu'ils puissent utiliser des messages, relatifs à au moins un système de navigation par satellites, diffusés selon un nouveau format par des satellites dudit système de navigation par satellites et/ou par des équipements associés à ce dernier, comme par exemple des pseudolites (tels que des émetteurs implantés au sol ou sur des avions à haute altitude).

Dans ce qui suit, on considère à titre d'exemple non limitatif que le système de navigation par satellites est le futur système GALILEO. Mais, l'invention n'est pas limitée à ce système. Elle concerne en effet tous les systèmes de navigation par satellites diffusant (ou pour lesquels sont diffusés) des messages (de navigation et éventuellement d'intégrité) présentant un format prédéfini vers des récepteurs de navigation d'usagers, et notamment les systèmes existants de type GPS ou GLONASS, et le futur système COMPASS, ainsi que tous leurs équivalents et dérivés, y compris ceux fonctionnant en mode dit « assisté ».

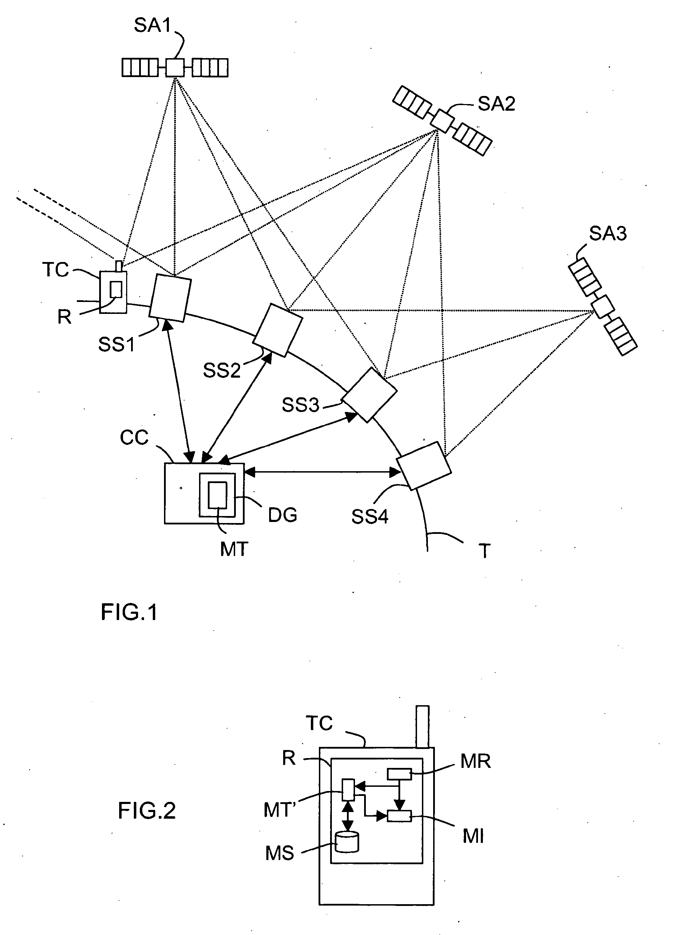

Comme cela est schématiquement et partiellement illustré sur la figure 1, un système de navigation par satellites comprend au moins une constellation de satellites SAi (ici i = 1 à 3, mais dans la réalité sa valeur maximale est beaucoup plus grande, typiquement 36 dans le cas du système GALILEO), un ensemble de stations de surveillance (terrestres ou spatiales) SSj (ici j = 1 à 4, mais dans la réalité sa valeur maximale est beaucoup plus grande, typiquement de 40 à 100 dans le cas du système GALILEO), et un centre de calcul CC.

Schématiquement, les satellites SAi sont placés en orbite autour de la Terre T et sont chargés, notamment, d'émettre des signaux permettant de faire des mesures de pseudo-distances et généralement de diffuser en direction de la Terre T des messages (présentant un format prédéfini) transmis par le segment sol de mission. Les informations contenues dans ces messages sont destinées à être exploitées par des récepteurs de navigation R, éventuellement implantés dans des terminaux de communication TC (comme illustré), et par les stations de surveillance SSj.

Dans ce qui suit, on considère à titre d'exemple non limitatif que les messages diffusés sont des messages de navigation. Par ailleurs, on considère à titre d'exemple non limitatif que les messages ne sont diffusés que par les satellites SAi du système de navigation par satellites. Mais, tout ou partie de ces messages pourraient être diffusés par d'autres équipements associés au système de navigation par satellites, comme par exemple des pseudolites (tels que des émetteurs implantés au sol ou sur des avions à haute altitude).

On notera qu'un récepteur (de navigation) R peut constituer lui-même un équipement de communication. Par ailleurs, un récepteur (de navigation) R peut être implanté dans tout type de terminal (ou équipement) de communication TC, et notamment dans un téléphone mobile (ou cellulaire), un ordinateur portable ou embarqué, ou un assistant personnel numérique (ou PDA).

L'invention propose d'adjoindre un dispositif de génération de messages DG au système de navigation par satellites. Comme cela est illustré sur la figure 1, ce dispositif de génération de messages DG peut faire partie du centre de calcul CC. Mais, cela n'est pas obligatoire.

Le dispositif de génération de messages DG comprend un module de traitement MT chargé de générer, à destination des récepteurs R et lorsqu'il en reçoit l'ordre, des messages d'un nouveau type, appelés messages de description.

Plus précisément, le module de traitement MT est chargé de générer à partir d'une date choisie (qui lui est imposée) des messages de description qui comprennent la description du format des futurs messages de navigation qui seront diffusés vers les récepteurs R, par exemple par les satellites SAi (bien que cela ne soit pas obligatoire), à partir d'une date postérieure à la date choisie.

Les messages de description sont donc destinés à fournir aux récepteurs R, qui sont configurés, à un instant donné, pour utiliser des messages de navigation présentant un format prédéfini, la description du prochain format des futurs messages de navigation avant que le format en vigueur ne soit modifié.

Comme cela est schématiquement et fonctionnellement illustré sur la figure 2, un récepteur R selon l'invention comprend un module de réception MR, une interface MI, des moyens de stockage MS et un module de traitement MT'.

Le module de réception MR est chargé de recevoir les messages de navigation et de description qui sont diffusés par le système de navigation par satellites (et/ou par tout autre équipement associé).

L'interface MI est configurée de manière à pouvoir utiliser les messages de navigation qui sont reçus, selon le format prédéfini en vigueur, par le module de réception MR. Cette interface MI est reconfigurable. A cet effet, elle comprend par exemple une mémoire de type EEPROM (« Electrically Erasable Programmable Read-Only Memory » - mémoire morte reprogrammable par effacement électrique).

Cette interface MI remplie la fonction de table de transcodage. Elle est en effet chargée de convertir les informations contenues dans chaque message de navigation, qui se présente dans le format pour lequel elle est configurée, dans un format qui est exploitable par son récepteur R.

Les moyens de stockage MS peuvent se présenter sous n'importe quelle forme, comme par exemple une mémoire.

Le module de traitement MT' est tout d'abord chargé, chaque fois que le module de réception MR reçoit un message de description, de stocker dans les moyens de stockage MS la description de format nouveau contenue dans ce message de description. Pour ce faire, il observe les messages que reçoit le module de réception MR afin d'extraire les informations qui sont contenues dans les messages de description (et qui constituent la description du futur format nouveau), puis il transmet les informations extraites aux moyens de stockage MS.

Il est également chargé, lorsque le module de réception MR reçoit du système de navigation par satellites une instruction requérant le changement de configuration de l'interface MI, d'accéder aux moyens de stockage MS pour extraire la description du format nouveau stockée. Puis, il reconfigure l'interface MI en fonction de cette description de format nouveau. L'interface MI est alors en mesure d'utiliser les messages de navigation qui présentent le format nouveau, qui lui sont communiqués par le module de réception MR.

Le dispositif de traitement MT' et les moyens de stockage MS du récepteur de navigation R selon l'invention, peuvent être réalisés sous la forme de circuits électroniques, de modules logiciels (ou informatiques), ou d'une combinaison de circuits et de logiciels.

De préférence, chaque description de format nouveau, définie par le module de traitement MT du dispositif DG, comprend au moins les descriptions de champs de données successifs qui sont dédiés respectivement à des paramètres différents ainsi que la façon dont ces champs de données seront associés les uns aux autres pour constituer les futurs messages de navigation.

Il est important de noter qu'un format nouveau peut différer d'un format en vigueur de n'importe quelle façon. Ainsi, un format nouveau peut comporter un ou plusieurs champs additionnels par rapport à un format en vigueur, ou bien un ou plusieurs champs de moins qu'un format en vigueur, ou encore un ou plusieurs champs additionnels et un ou plusieurs champs de moins qu'un format en vigueur.

En variante ou en complément, un format nouveau peut comporter le même nombre de champs qu'un format en vigueur, mais l'un au moins de ses champs peut être dédié à un paramètre dont le type et/ou la représentation n'est (ne sont) pas le(s) même(s) que celui (ceux) du même paramètre du format en vigueur.

On entend ici par « type de paramètre » le format du dit paramètre, à savoir logique, énumération, entier, flottant. Par ailleurs, on entend ici par « représentation d'un paramètre » le fait que le paramètre soit un entier codé sur 16 bits ou 32 bits, signé ou non signé, ou soit un nombre flottant codé sur 32 bits ou 64 bits, par exemple.

Ainsi, un paramètre d'un format nouveau peut être défini par un nombre de bits plus ou moins important que celui du même paramètre du format en vigueur.

Le module de traitement MT du dispositif DG peut être également chargé d'adjoindre dans la description de format de chaque message de description des données représentant la fréquence de répétition des futurs messages de navigation. Cette information permet en effet de programmer les plages de fonctionnement du récepteur R pour qu'il soit sous tension lorsqu'un message de navigation est censé lui parvenir.

On notera que les récepteurs R doivent être également configurés de manière à être sous tension le temps de recevoir intégralement une description de format nouveau. Par exemple, une date d'applicabilité du futur format nouveau est communiquée aux récepteurs R longtemps à l'avance par le système, au moyen de messages, et les messages de description commencent à être transmis une fois la date d'applicabilité communiquée. Ainsi dès qu'un récepteur R est au courant de la date d'applicabilité, il reste sous tension le temps de recevoir intégralement la description de format nouveau, puis il reprend son fonctionnement normal (classique) jusqu'à la date d'applicabilité où il se reconfigure avec le format nouveau stocké.

Par ailleurs, le module de traitement MT du dispositif DG génère préférentiellement ses messages de description de façon périodique. La période temporelle de transmission des messages de description est alors préférentiellement choisie plus grande, voire beaucoup plus grande, que la période temporelle de transmission des messages de navigation, afin de ne pas consommer trop de bande passante. Par exemple, si la période temporelle de transmission des messages de navigation est comprise entre environ 30 secondes et environ 5 minutes, alors la période temporelle de transmission des messages de description peut être comprise entre environ une heure et environ un jour.

La durée pendant laquelle le module de traitement MT du dispositif DG est chargé par le système de navigation par satellites de générer des messages de description d'un format nouveau avant que ce dernier ne soit instauré, est choisie préférentiellement longue. Par exemple, cette durée est comprise entre environ six mois et environ deux ans. Ainsi, les récepteurs R disposent de suffisamment de temps pour mémoriser la description du format nouveau.

Le dispositif de génération de messages DG selon l'invention, et notamment son module de traitement MT, peut être réalisé sous la forme de circuits électroniques, de modules logiciels (ou informatiques), ou d'une combinaison de circuits et de logiciels.

Bien que ce ne soit pas le cas de l'exemple illustré sur la figure 1, le dispositif de génération de messages DG selon l'invention peut faire partie d'un équipement de transmission de messages appartenant par exemple (mais pas obligatoirement) au système de navigation par satellites. Dans ce cas, l'équipement comprend un module de transmission chargé de transmettre à destination des satellites SAi (et/ou de tout autre équipement chargé de la diffusion) les messages de navigation ainsi que les messages de description générés par le dispositif DG.

Grâce à l'invention, il est donc possible de faire évoluer (ou de corriger) un système de navigation par satellites tout en maintenant une compatibilité avec le parc de récepteurs de navigation existant.

L'invention ne se limite pas aux modes de réalisation de dispositif de génération de messages, d'équipement de système, d'équipement de transmission de messages et de récepteur de navigation décrits ci-avant, seulement à titre d'exemple, mais elle englobe toutes les variantes que pourra envisager l'homme de l'art dans le cadre des revendications ci-après.

Ainsi, dans ce qui précède on a décrit une application de l'invention aux messages dits de navigation. Mais, l'invention s'applique à tout type de message relatif à un système de navigation par satellites, et notamment aux messages dits d'intégrité, qu'ils soient diffusés par les satellites dudit système de navigation par satellites et/ou par des équipements associés à ce dernier, comme par exemple des pseudolites (tels que des émetteurs implantés au sol ou sur des avions à haute altitude).

## Revendications

1. Dispositif (DG) de génération de messages destinés à être diffusés par au moins un système de navigation par satellites (SAi) et destinés à des récepteurs de navigation (R), **caractérisé en ce qu'**il comprend des moyens de traitement (MT) agencés pour générer des messages dits « de descriptions » destinés à être diffusés vers lesdits récepteurs de navigation (R) à partir d'une date choisie et comprenant une description d'un format de futurs messages destinés à être diffusés vers lesdits récepteurs de navigation (R) par ledit au moins système de navigation par satellites (SAi) à partir d'une date postérieure à ladite date choisie.

2. Dispositif selon la revendication 1, **caractérisé en ce que** lesdits moyens de traitement (MT) sont agencés pour définir des descriptions de format comprenant au moins des descriptions de champs de données successifs, dédies respectivement à des paramètres, et la façon dont lesdits champs de données seront associés les uns aux autres de manière à constituer lesdits futurs messages.

3. Dispositif selon la revendication 2, **caractérisé en ce que** chaque paramètre est décrit par au moins un type et une représentation.

4. Dispositif selon l'une des revendications 2 et 3, **caractérisé en ce que** lesdits moyens de traitement (MT) sont agencés pour adjoindre aux définitions de description de format des données représentatives d'une fréquence de répétition desdits futurs messages.

5. Dispositif selon l'une des revendications 1 à 4, **caractérisé en ce que** lesdits moyens de traitement (MT) sont agencés pour générer lesdits messages de description de façon périodique, la période temporelle étant grande par rapport à la période de transmission desdits messages.

6. Dispositif selon l'une des revendications 1 à 5, **caractérisé en ce que** lesdits moyens de traitement (MT) sont agencés pour générer lesdits messages de description pendant une longue durée a compter de ladite date choisie.

7. Equipement (CC) pour un système de navigation par satellites (SA), **caractérisé en ce qu'**il comprend un dispositif de génération de messages (DG) selon l'une des revendications précédentes.

8. Equipement de transmission de messages relatifs à un système de navigation par satellites (SAi), **caractérisé en ce qu'**il comprend un dispositif de génération de messages, (DG) selon l'une des revendications 1 à 6 et des moyens de transmission chargés de transmettre, à destination des satellites (SAi) dudit système de navigation par satellites et/ou d'équipement(s) de diffusion associés audit système de navigation par satellites, des messages de navigation et des messages de description générés par ledit dispositif (DG).

9. Récepteurde navigation (R), comprenant des moyens de réception (MR), propres à recevoir des messages relatifs à un système de navigation par satellites (SAi), et des moyens d'interface (MI) propres à être configurés de manière à utiliser les messages reçus par lesdits moyens de réception (MR), **caractérisé en ce qu'**il comprend des moyens de stockage (MS) et des moyens de traitement (MT') agences, en cas de réception d'un message de description généré par un dispositif de génération de messages (DG) selon l'une des revendications 1 à 6, pour stocker dans lesdits moyens de stockage (MS) la description de format nouveau qu'il contient, et, en cas de réception d'une instruction de changement de configuration, pour reconfigurer lesdits moyens d'interface (MI) en fonction de ladite description de format nouveau stockée, de sorte que lesdits moyens d'interface (MI) puissent utiliser les messages présentant ledit format nouveau.

10. Utilisation du dispositif de génération de messages (DG), de l'équipement de système (CC), de l'équipement de transmission de messages et du récepteur de navigation (R) selon l'une des revendications précédentes, pour les systèmes de navigation par satellites choisis dans un groupe comprenant au moins GALILEO, GPS, GLONASS et COMPASS, ainsi que leurs variantes et leurs équivalents.

## Claims

1. Device (DG) for the generation of messages intended to be broadcast by at least one satellite navigation system (SAi) and intended for navigation receivers (R), **characterized in that** it includes processing means (MT) configured to generate so-called "description" messages intended to be broadcast to said navigation receivers (R) starting at, a chosen date and including a description of a format for future messages intended to be broadcast to said navigation receivers (R) by said at least one satellite navigation system (SAI) starting at a date later than said chosen date.

2. Device according to claim 1, **characterized in that** said processing means (MT) are configured to define format descriptions including at least descriptions of successive data fields, dedicated respectively to parameters, and the way in which said data fields will be associated with each other in order to constitute said future messages,

3. Device according to claim 2, **characterized in that** each parameter is described by at least one type and one representation.

4. Device according to one of claims 2 and 3, **characterized in that** said processing means (MT) are configured to attach, to the format description definitions, data representative of a frequency of repetition of said future messages.

5. Device according to one of claims 1 to 4, **characterized in that** said processing means (MT) are configured to generate said description messages periodically, with the time period being large in relation to the transmission period of said messages,

6. Device according to one of claims 1 to 5, **characterized in that** said processing means (MT) are configured to generate said description messages over a long duration starting from said chosen date.

7. Equipment (CC) for a satellite navigation system (SAi), **characterized in that** it includes a message generation device (DG) according to one of the previous claims.

8. Equipment for the transmission of messages relating to a satellite navigation system (SAi), **characterized in that** it includes a message generation device (DG) according to one of claims 1 to 6 and transmission means responsible for sending to the satellites (SAi) of said satellite navigation system and/or distribution equipment associated with said satellite navigation system, navigation messages and description messages generated by said device (DG),

9. Navigation receiver (R), including reception means (MR), able to receive messages relating to a satellite navigation system (SAi), and interface means (MI) able to be configured so as to use the messages received by said reception means (MR), **characterized in that** it includes storage means (MS) and processing means (MT) configured, in the event of reception of a description message generated by a message generation device (DG) according to one of claims 1 to 6, to store in said storage means (MS) the new format description that it contains and, in the event of reception of a configuration change instruction, to reconfigure said interface means (MI) based on said new format description stored, so that said interface means (MI) can use the messages presenting said new format.

10. Use of the message generation device (DG), the system equipment (CC), the message transmission equipment and the navigation receiver (R) according to one of the previous claims, for satellite navigation systems Selected from a group including at least GALILEO, GPS, GLONASS and COMPASS, as well as their variants and their equivalents.

## Patentansprüche

1. Vorrichtung (DG) zur Erzeugung von Nachrichten, die für das Aussenden über mindestens ein Satelliten-Navigationssystem (SAi) bestimmt und an Navigationsempfänger (R) gerichtet sind, **dadurch gekennzeichnet, dass** sie Verarbeitungsmittel (MT) umfasst, weiche dazu ausgelegt sind, sogenannte "Beschreibungs"-Nachrichten zu erzeugen, die für das Aussenden an die besagten Navigationsempfänger (R) ab einem gewählten Datum bestimmt sind und eine Beschreibung eines Formats von zukünftigen Nachrichten, welche für das Aussenden an die besagten Navigationsempfänger (R) über das besagte mindestens eine Satelliten-Navigationssystem (SAi) ab einem späteren Datum als das besagte gewählte Datum bestimmt sind, enthalten.

2. Vorrichtung nach Anspruch 1, **dadurch gekennzeichnet, dass** die besagten Verarbeitungsmittel (MT) dazu ausgelegt sind, Formatbeschreibungen zu definieren, welche mindestens Beschreibungen von aufeinanderfolgenden, jeweils für Parameter vorgesehene Datenfeldern, sowie die Art, nach welcher die besagten Datenfelder einander zugeordnet werden, um die besagten zukünftigen Nachrichten zu bilden, enthalten,

3. Vorrichtung nach Anspruch 2, **dadurch gekennzeichnet, dass** jeder Parameter durch mindestens einen Typ und eine Darstellung beschrieben wird.

4. Vorrichtung nach einem der Ansprüche 2 und 3, **dadurch gekennzeichnet, dass** die besagten Verarbeitungsmittel (MT) dazu ausgelegt sind, den Formatbeschreibungsdefinitionen Daten, welche für eine Wiederholungsfrequenz der besagten zukünftigen Nachrichten repräsentativ sind, hinzuzufügen.

5. Vorrichtung nach einem der Ansprüche 1 bis 4, **dadurch gekennzeichnet, dass** die besagten Verarbeitungsmittel (MT) dazu ausgelegt sind, die besagten Beschreibungsnachrichten periodisch zu erzeugen, wobei der Zeitraum im Verhältnis zur Übertragungszeit der besagten Nachrichten lang ist.

6. Verfahren nach einem der Ansprüche 1 bis 5, **dadurch gekennzeichnet, dass** die besagten Verarbeitungsmittel (MT) dazu ausgelegt sind, die besagten Beschreibungsnachrichten während einer langen Dauer ab dem besagten gewählten Datum zu erzeugen.

7. Gerät (CC) für ein Satelliten-Navigationssystem (SAi), **dadurch gekennzeichnet, dass** es eine Nachrichtenerzeugungsvorrichtung (DG) nach einem der vorstehenden Ansprüche umfasst.

8. Nachrichtenübertragungsgerät für ein Satelliten-Navigationssystem (SAi), **dadurch gekennzeichnet, dass** es eine Nachrichtenerzeugungsvorrichtung (DG) nach einem der Ansprüche 1 bis 6 sowie Übertragungsmittel, welche dazu bestimmt sind, von der besagten Vorrichtung (DG) erzeugte Navigations- und Beschreibungsnachrichten an die Satelliten (SAi) des besagten Satelliten-Navigationssystem und/oder an ein oder mehrere dem besagten Satelliten-Navigationssystem zugeordnete(s) Sendegerät(e) zu übertragen.

9. Navigationsempfänger (R) mit Empfangsmitteln (MR), welche für den Empfang von Nachrichten, die ein Satelliten-Navigationssystem (SAi) betreffen, ausgelegt sind, und Schnittstellenmitteln (MI), welche für die Verwendung der von den besagten Empfangsmitteln (MR) empfangenen Nachrichten konfigurierbar sind, **dadurch gekennzeichnet, dass** er Speichermittel (MS) und Verarbeitungsmittel (MT') umfasst, welche dazu ausgelegt sind, im Fall des Empfangs einer von einer Nachrichtenerzeugungsvorrichtung (DG) nach einem der Ansprüche 1 bis 6 erzeugten Beschreibungsnachricht die darin enthaltene Beschreibung des neuen Formats in den besagten Speichermitteln (MS) zu speichern und im Fall des Empfangs eines Konfigurationsänderungsbefehls die besagten Schnittstellenmittel (MI) gemäß der besagten gespeicherten Beschreibung des neuen Formats zu rekonfigurieren, so dass die besagten Schnittstellenmittel (MI) die das besagte neue Format aufweisenden Nachrichten verwenden können.

10. Verwendung der Nachrichtenerzeugungsvorrichtung (DG), des Systemgeräts (CC), des Nachrichtenübertragungsgeräts und des Navigationsempfängers (R) nach einem der vorstehenden Ansprüche für Satelliten-Navigationssysteme, welche in einer Gruppe gewählt werden, die mindestens GALILEO, GPS, GLONASS und COMPASS sowie deren Varianten und deren Entsprechungen umfasst.
